(19) Europäisches Patentamt / European Patent Office / Office européen des brevets

(11) **EP 3 939 844 B1**

(12) **EUROPEAN PATENT SPECIFICATION**

(45) Date of publication and mention
of the grant of the patent:
**06.11.2024 Bulletin 2024/45**

(21) Application number: **20774774.2**

(22) Date of filing: **18.03.2020**

(51) International Patent Classification (IPC):
**B60W 30/165** (2020.01) **B60W 40/105** (2012.01)
**B60W 40/107** (2012.01) **B60W 30/14** (2006.01)
**B60W 30/16** (2020.01)

(52) Cooperative Patent Classification (CPC):
**B60W 30/16; B60W 30/143;** B60W 2520/10;
B60W 2554/802; B60W 2554/804; B60W 2720/10;
B60W 2720/106

(86) International application number:
**PCT/CN2020/079953**

(87) International publication number:
**WO 2020/187254 (24.09.2020 Gazette 2020/39)**

(54) **LONGITUDINAL CONTROL METHOD AND SYSTEM FOR AUTOMATIC DRIVING VEHICLE**

VERFAHREN UND SYSTEM ZUR LÄNGSSTEUERUNG FÜR EIN AUTOMATISCH FAHRENDES FAHRZEUG

PROCÉDÉ ET SYSTÈME DE COMMANDE LONGITUDINALE POUR VÉHICULE À CONDUITE AUTOMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2019 CN 201910204325**

(43) Date of publication of application:
**19.01.2022 Bulletin 2022/03**

(73) Proprietor: **Great Wall Motor Company Limited**
**Baoding, Hebei 071000 (CN)**

(72) Inventors:
• **ZHANG, Kai**
**Baoding, Hebei 071000 (CN)**
• **HE, Lin**
**Baoding, Hebei 071000 (CN)**
• **ZHEN, Longbao**
**Baoding, Hebei 071000 (CN)**
• **GE, Jianyong**
**Baoding, Hebei 071000 (CN)**
• **WANG, Tianpei**
**Baoding, Hebei 071000 (CN)**

• **WEI, Songbo**
**Baoding, Hebei 071000 (CN)**
• **CHANG, Shiwei**
**Baoding, Hebei 071000 (CN)**
• **ZHANG, Jian**
**Baoding, Hebei 071000 (CN)**
• **GUAN, Xin**
**Baoding, Hebei 071000 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
CN-A- 101 417 655    CN-A- 104 527 644
CN-A- 104 925 057    CN-A- 105 644 560
CN-A- 105 857 309    CN-A- 106 476 806
CN-A- 108 860 148    CN-A- 109 131 312
JP-A- 2017 036 044    US-A1- 2017 334 454
US-A1- 2018 093 668

## Description

### FIELD

The present invention relates to the technical field of intelligent transportation, and in particular to a longitudinal control method and system for an automatic driving vehicle.

### BACKGROUND

An automatic driving vehicle implements an automatic driving based on an intelligent driving system. The automatic driving vehicle acquires information of external environment and information of the vehicle through various sensing systems mounted on the vehicle body, then integrates inputted information and makes a decision (respectively performed by an integration system and a decision making system). Thus, a drivable safe route is planed according to driving conditions and safe driving of the vehicle is motored and controlled in a real time manner through a control system, ensuring highly automated driving of the vehicle. The control system serves as a core of the intelligent driving system, the performance of which directly determines standard for safe driving and automation degree of the vehicle. Therefore, the control system is the key and difficult point of research and development for companies. The control system includes two parts, i.e., a lateral control system and a longitudinal control system. The lateral control system controls steering of the automatic driving vehicle in a real time manner based on a series of control algorithms, to control the vehicle to maintain a lane, automatically change a lane, dynamically avoid an obstacle, U-turn and swerve according to the planned route. The longitudinal control system controls the automatic driving vehicle to longitudinally move at a safe driving speed by controlling acceleration and deceleration of the vehicle, so that the automatic driving vehicle operates in a start-stop mode, a following mode and a cruise mode. The entire control system can realize automatic control of the vehicle's steering and speed at the same time, by coupling the lateral control with the longitudinal control.

The longitudinal movement is divided into three modes which are the cruise mode, the following mode and the Autonomous Emergency Braking (AEB) mode based on the state of motion. The cruise mode refers to that the automatic driving vehicle can drive at a maximum speed of the vehicle when no front vehicle is within an action distance (the action distance is recorded as ActDis_m, which refers to a minimum distance threshold for the automatic driving vehicle switching from the cruise mode to the following mode, and is related to speeds of the ego vehicle and the front vehicle). The following mode refers to that the automatic driving vehicle drives following the front vehicle without changing a lane in the case that a front vehicle is within the action distance in the lane in which the ego vehicle drives. The AEB mode refers to that the automatic driving vehicle brakes at a large deceleration to avoid or mitigate an accident, in the case that a change in driving environment around the ego vehicle may cause rear-end or collisions and endanger the driver, passengers and pedestrians. A corresponding control system is disclosed for example in document CN 104 925 057 A.

However, in the conventional longitudinal control solutions, only a control solution for the following mode or the cruise mode is provided without considering various working conditions that may occur in various states of the vehicle, and thus good control effect cannot be achieved.

### SUMMARY

In view of the above, a longitudinal control method for an automatic driving vehicle is provided according to the present invention to solve at least partial of the above technical problems.

In order to realize the above objectives, the technical solutions of the present invention are described as following.

A longitudinal control method for an automatic driving vehicle includes:

detecting a current longitudinal mode of the automatic driving vehicle, where the longitudinal mode comprises a cruise mode, a following mode, and an autonomous emergency braking, AEB, mode;
in the following mode of the automatic driving vehicle, determining a control algorithm corresponding to a current working condition based on a pre-configured correspondence relationship between working conditions of the automatic driving vehicle in the following mode and control algorithms, where the control algorithm is used for controlling a speed change of the automatic driving vehicle in a working condition corresponding to the control algorithm; and controlling, based on the determined control algorithm, the automatic driving vehicle to perform a following movement;
in the cruise mode of the automatic driving vehicle, acquiring a current speed of an ego vehicle in the cruise mode, and calculating a relative speed difference between the current speed and a maximum drivable speed of an ego vehicle; correcting the relative speed difference to cause a variation of the relative speed difference in a control period to be within a predetermined range; calculating an acceleration of the ego vehicle based on the corrected relative speed difference; and adjusting a speed of the ego vehicle in the cruise mode based on the acceleration of the ego vehicle.

Further, the correspondence relationship between working conditions of the automatic driving vehicle in the following mode and control algorithms includes any one or more of: a first working condition in which a speed of a front vehicle is less than a speed of the ego vehicle and a real distance between the front vehicle and the ego vehicle is less than a desired distance, and a first control algorithm used for controlling the ego vehicle in the first working condition to decelerate at an first acceleration; a second working condition in which the speed of the front vehicle is less than the speed of the ego vehicle and the real distance between the front vehicle and the ego vehicle is greater than the desired distance, and a second control algorithm used for controlling the ego vehicle in the second working condition to decelerate at a second acceleration; a third working condition in which the speed of the front vehicle is greater than the speed of the ego vehicle and the real distance between the front vehicle and the ego vehicle is greater than the desired distance, and a third control algorithm used for controlling the automatic driving vehicle in the third working condition to accelerate at a third acceleration; a fourth working condition in which the speed of the front vehicle is greater than the speed of the ego vehicle and the real distance between the front vehicle and the ego vehicle is less than the desired distance, and a fourth control algorithm used for controlling the ego vehicle in the fourth working condition to decelerate at fourth acceleration; and a fifth working condition in which a difference between the speed of the front vehicle and the speed of the ego vehicle is within a set speed threshold range and the real distance between the front vehicle and the ego vehicle is within a set distance threshold range, and a fifth control algorithm used for controlling the ego vehicle in the fifth working condition to follow the front vehicle stably.

According to the invention, in the first control algorithm, the first acceleration a1 is calculated according to a formula:

$$a1 = \begin{cases} -\dfrac{\left(VehSpd_{kph} - FroVehSpd_{kph}\right)^2}{3.6 * 3.6 * 2 * (RelaDis_m - SfDis_m)} * \dfrac{VehSpd_{kph}}{FroVehSpd_{kph}} * \dfrac{ExpDis_m}{RelaDis_m} & SfDis\_m < RelaDis\_m < ExpDis\_m \\ -\dfrac{(VehSpd\_kph - FroVehSpd\_kph)^2}{3.6 * 3.6 * 2 * (RelaDis\_m - AEBDis\_m)} * \dfrac{VehSpd\_kph}{FroVehSpd\_kph} * \dfrac{ExpDis\_m}{RelaDis\_m} & AEBDis\_m < RelaDis\_m < SfDis\_m \\ -8 & RelaDis_m < AEBDis\_m \end{cases}$$

$$AEBDis\_m = (VehSpd\_kph - FroVehSpd\_kph) * TTC/3.6$$

$$TTC = \begin{cases} \dfrac{RelaDis_m * 3.6}{VehSpd\_kph - FroVehSpd\_kph}, VehSpd_{kph} > FroVehSpd\_kph \\ 1000, \ VehSpd_{kph} \leq FroVehSpd\_kph \end{cases}$$

$$SfDis_m = 0.8509 * FroVehSpd\_kph + c \ ,$$

where VehSpd_kph represents the speed of the ego vehicle, FroVehSpd _kph represents the speed of the front vehicle, ExpDis m represents the desired distance, RelaDis_m represents the real distance between the front vehicle and the ego vehicle, SfDis_m represents a safe distance, AEBDis_m represents a braking distance, TTC represents a collision time, and c represents a constant, and where the safe distance indicates a demanded minimum distance between the front vehicle and the ego vehicle in a case that the ego vehicle has the same speed as the front vehicle, and the braking distance refers to a distance threshold between the front vehicle and the ego vehicle when the automatic driving vehicle switches from the following mode to the AEB mode.

Further, in the second control algorithm, the second acceleration a2 is calculated according to a formula:

$$a2 = -\frac{(VehSpd\_kph - FroVehSpd\_kph)^2}{3.6 * 3.6 * 2 * (RelaDis\_m - ExpDis\_m)} * K_1$$

where VehSpd _kph represents the speed of the ego vehicle, FroVehSpd _kph represents the speed of the front vehicle, ExpDis_m represents the desired distance, RelaDis_m represents the real distance between the front vehicle and the ego vehicle, and $K_1$ represents a constant used for compensating for a delay effect of a control algorithm.

Further, in the third control algorithm, the third acceleration a3 is calculated according to a formula:

$$a3 = \begin{cases} k31, & C31 \\ k32, & C32 \\ k33, & C33 \\ k34, & C34 \end{cases}$$

where C31 to C34 respectively represent different acceleration states, and k31 to k34 respectively represent accelerations corresponding to different acceleration states; and/or
in the fourth control algorithm, the fourth acceleration a4 is calculated according to a formula:

$$a4 = \begin{cases} k41, & C41 \\ k42, & C42 \\ k43, & C43 \\ k44, & C44 \end{cases},$$

where C41 to C44 respectively represent different deceleration states, and k41 to k44 respectively represent accelerations corresponding to different deceleration states.

Further, in the fifth control algorithm, the fifth acceleration as is calculated according to a formula:

$$a5 = (FroVehSpd\_kph - VehSpd\_kph) * k_p \ ,$$

where VehSpd_kph represents the speed of the ego vehicle, FroVehSpd _kph represents the speed of the front vehicle, and $K_p$ represents a proportionality coefficient.

Further, the calculating an acceleration of the ego vehicle includes: calculating the acceleration a of the ego vehicle according to a formula:

$$a= (TopSpd\_kph\text{-}VehSpd\_kph) *Kp,$$

where TopSpd _kph represents a maximum speed, VehSpd _kph represents the current speed, Kp represents a proportionality parameter of P control, and the proportionality parameter Kp is determined according to a formula:

$$Kp = \begin{cases} K_0, & VehSpd\_kph < TopSpd\_kph \\ K_1, & VehSpd\_kph \geq TopSpd\_kph \end{cases},$$

where $K_0$ represent a first parameter which corresponds to an optimal ride experience in an acceleration working condition of a vehicle and is determined in a real vehicle test, and $K_1$ represent a second parameter which corresponds to an optimal ride experience in a deceleration working condition and is determined in the real vehicle test.

Further, the longitudinal control method for an automatic driving vehicle further includes: in the AEB mode of the automatic driving vehicle, controlling the automatic driving vehicle to brake at a braking deceleration ranging from 0.7g to 0.9g, where g represents a gravitational acceleration.

Compared with the conventional technology, the longitudinal control method for the automatic driving vehicle according to the present invention has the following advantages. With the longitudinal control method for the automatic driving vehicle according to the present invention, the following control algorithms corresponding to multiple follow working conditions can be matched based on the speed of the front vehicle, the speed of the ego vehicle and the real distance between the two vehicles. In the case that the ego vehicle is in a working condition, a following control algorithm corresponding to the working condition is performed, so that this vehicle follows the front vehicle well. In addition, the longitudinal control method for the automatic driving vehicle according to the present invention optimizes the cruise control, and thus efficiency, safety and comfortableness of the longitudinal control algorithm are improved.

Another objective of the present invention is to provide a machine-readable storage medium and a processor to solve at least partial of the above technical problems.

In order to realize the above objectives, the technical solutions of the present invention are described as following.

A machine-readable storage medium is provided. The machine-readable storage medium stores instructions used for controlling a machine to perform the longitudinal control method for the automatic driving vehicle described above.

A processor is provided. The processor is configured to execute a program to perform the longitudinal control method for the automatic driving vehicle described above. Another objective of the present invention is to provide a longitudinal control system for an automatic driving vehicle to solve at least partial of the above technical problems.

In order to realize the above objectives, the technical solutions of the present invention are described as following.

A longitudinal control system for an automatic driving vehicle is provided. The system includes a positioning unit, a map unit, a detection unit, and the processor described above. The positioning unit is configured to acquire current position information of the automatic driving vehicle. The map unit is connected to the positioning unit through a signal and is configured to output map information around the automatic driving vehicle based on the current position information. The detection unit is configured to detect information of an obstacle around the automatic driving vehicle. The processor is connected to the map unit and the detection unit through signals and is configured to acquire information of an object in front of the automatic driving vehicle based on the map information and the information of the obstacle, and perform a longitudinal control on the vehicle based on the information of the object in front of the automatic driving vehicle.

The machine-readable storage medium, the processor, the longitudinal control system, and the longitudinal control method have the same advantages compared with the conventional technology, which will not be repeated herein.

Other features and advantages of the present invention are described in detail in the following embodiments.

## BRIEF DESCRIPTION OF THE DRAWINGS

Drawings that form part of the present invention are used for providing further understanding of the present invention, and the schematic embodiments of the present invention and descriptions of the embodiments are used to explain the present invention and do not limit the present invention. In the drawings:

Figure 1 is a flowchart of a longitudinal control method for an automatic driving vehicle according to an embodiment of the present invention,
Figure 2 is a flowchart of a following control according to an embodiment of the present invention;
Figure 3 is a schematic diagram of five working conditions in a following mode according to an embodiment of the present invention;
Figure 4 is a flowchart of a cruise control according to an embodiment of the present invention;
Figure 5 is a schematic diagram of a switch between longitudinal modes according to an embodiment of the present invention,
Figure 6 is a schematic structural diagram of a longitudinal control system for an automatic driving vehicle according to an embodiment of the present invention; and
Figure 7 is a schematic diagram of a communication in an exemplary longitudinal control, system for an automatic driving vehicle according to an embodiment of the present invention.

Reference numerals are listed as follows:

610: positioning unit
620: map unit
630: detection unit
640: processor

## DETAILED DESCRIPTION OF EMBODIMENTS

It should be noted that the embodiments of the present invention may be combined with each other without conflict.

The present invention is described in detail below with reference to the drawings and in conjunction with the embodiments.

Before a longitudinal control method for an automatic driving vehicle according embodiments of the present invention is described, three modes involved in a longitudinal control of the automatic driving vehicle will be introduced, which includes a cruise mode, a following mode, and an AEB mode. In other embodiments, the longitudinal control may further include a start-stop mode. In the start-stop mode, the automatic driving vehicle can be accurately controlled to park at a predetermined position (for example, a toll station, a service area and the like). A function of the start-stop mode can be realized in the cruise mode. Thus, the start-stop mode is subordinate to the following mode, which will not be described separately in the embodiments of the present invention.

1) Cruise mode

The cruise mode refers to that a maximum drivable speed of the automatic driving vehicle is adjusted when no front vehicle is within an action distance (ActDis_m) of the automatic driving vehicle (also referred to as an ego vehicle hereafter). When the speed is less than the maximum speed, the automatic driving vehicle accelerates. Otherwise, the automatic driving vehicle decelerates.

2) Following mode

The following mode refers to that a speed of the ego vehicle is adjusted, when a front vehicle is located within the action distance of the automatic driving vehicle in a lane in which the automatic driving vehicle drives and the ego vehicle drives following the front vehicle without changing a lane. In this way, a safe distance and a relative speed between the ego vehicle and the front vehicle are maintained, while a safe driving is ensured.

3) AEB mode

The AEB mode refers to that the automatic driving vehicle brakes at a large deceleration when a longitudinal decision transmits a signal of AEB mode.

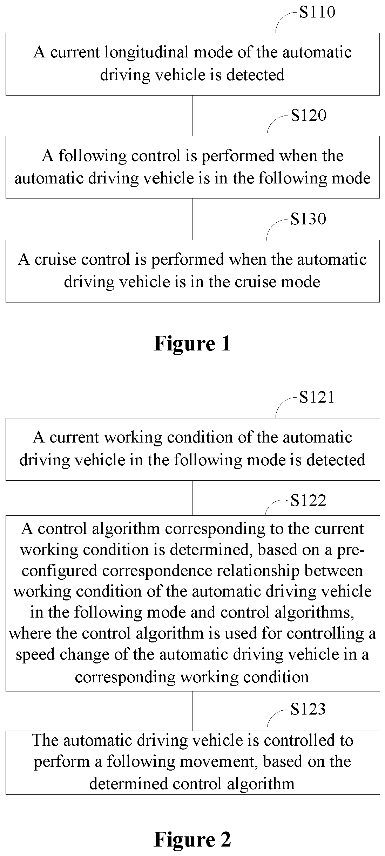

Figure 1 is a flowchart of a longitudinal control method for an automatic driving vehicle according to an embodiment of the present invention. As shown in Figure 1, the longitudinal control method includes the following steps S110 to S130.

In step S 110, a current longitudinal mode of the automatic driving vehicle is detected.

The longitudinal mode includes the cruise mode, the following mode, and the AEB mode described above.

In step S120, when the automatic driving vehicle is in the following mode, a following control is performed.

Figure 2 is a flowchart of a following control according to an embodiment of the present invention. As shown in Figure 2, the following control includes the following steps S121 to S123.

In step S121, a current working condition of the automatic driving vehicle in the following mode is detected.

In step S122, a control algorithm corresponding to the current working condition is determined, based on a pre-configured correspondence relationship between working condition of the automatic driving vehicle in the following mode and control algorithms. The control algorithm is used for controlling a speed change of the automatic driving vehicle in the working condition corresponding to the control algorithm.

In step S123, the automatic driving vehicle is controlled to perform a following movement, based on the determined control algorithm.

In an embodiment of the present invention, based on driving situations of the automatic driving vehicle in the following mode, the following mode is divided into five working conditions. Different working conditions are respectively configured with different control algorithms.

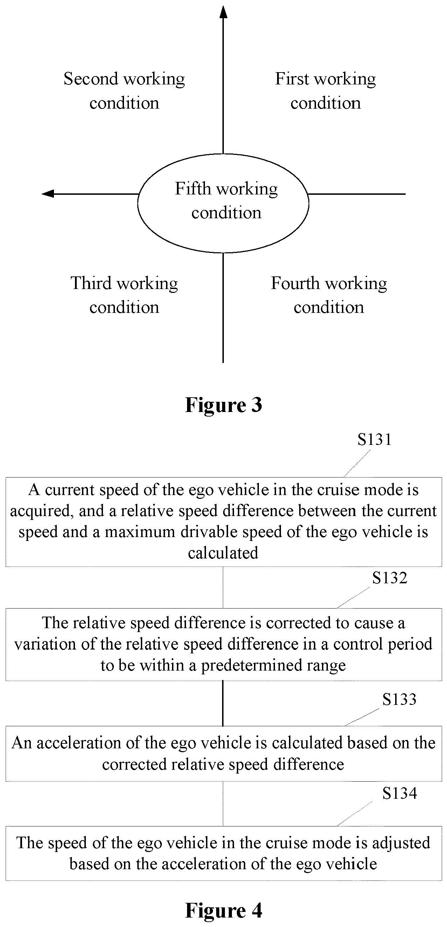

Figure 3 is a schematic diagram of five working conditions included in the following mode according to an embodiment of the present invention. ΔV represents a speed of the ego vehicle relative to the front vehicle. ΔD represents a difference between a desired distance and a real distance of the ego vehicle and the front vehicle. This difference indicates a relative distance between the two vehicles.

Referring to Figure 3, the five working conditions are briefly described as following.

1) In a first working condition, the front vehicle drives slowly and the relative distance is small. The slow front vehicle refers to that the speed of the front vehicle is less than a speed of the ego vehicle. The small relative distance refers to that the real distance between the front vehicle and the ego vehicle is less than the desired distance.

2) In a second working condition, the front vehicle drives slowly and the relative distance is large. The large relative distance refers to that the real distance between the front vehicle and the ego vehicle is greater than the desired distance.

3) In a third working condition, the front vehicle drives fast and the relative distance is large. The fast front vehicle refers to that the speed of the front vehicle is greater than the speed of the ego vehicle.

4) In a fourth working condition, the front vehicle drives fast and the relative distance is small.

5) In a fifth working condition, the ego vehicle follows the front vehicle steadily.

In a preferred embodiment, for the above five working conditions, the correspondence relationship between working conditions of the automatic driving vehicle in the following mode and control algorithms includes any one or more of the following.

1. The first working condition and a first control algorithm corresponding to the first working condition

The first control algorithm is used for controlling the ego vehicle in the first working condition to decelerate at a first acceleration. That is, when this vehicle is in the first working condition, it is required to control the vehicle to decelerate. Those skilled in the art can understand that "acceleration" is not limited to be used for indicating a scenario in which this vehicle accelerates, and also be used for indicating a scenario in which the vehicle decelerates. Both "decelerating at acceleration" and "deceleration" may be used for indicating the scenario in which the vehicle decelerates.
According to the invention a process of calculating the first acceleration is described. Before the process is described, concepts of a safe distance (SfDis_m) and a braking distance (AEBDis_m) are introduced. The safe distance (SfDis_m) refers to a demanded minimum distance between the ego vehicle and the front vehicle when the speeds of two vehicles are the same. The braking distance (AEBDis_m) refers to a distance threshold between the two vehicles when the automatic driving vehicle switches from the following mode to the AEB mode.
The braking distance (AEBDis_m) is calculated by calculating a time to collision (TTC). The TTC is calculated according to:

$$TTC = \begin{cases} \dfrac{RelaDis_m * 3.6}{VehSpd\_kph - FroVehSpd\_kph}, VehSpd_{kph} > FroVehSpd\_kph \\ 1000, \ VehSpd_{kph} \leq FroVehSpd\_kph \end{cases} \quad (1).$$

In the formula, VehSpd _kph represents the speed of the ego vehicle, FroVehSpd _kph represents the speed of the front vehicle, and RelaDis_m represents the real distance between the two vehicles.
Further, the braking distance AEBDis_m is calculated according to a formula:

$$AEBDis\_m = (VehSpd\_kph\text{-}FroVehSpd\_kph)*TTC/3.6 \quad (2).$$

Further, the safe distance (SfDis_m) is calculated according to a formula:

$$SfDis_m = 0.8509 * FroVehSpd\_kph + c \quad (3),$$

In the formula, c is a scalar. For example, c is equal to 8.
Based on the above formulas (1) to (3), in the present invention, the first acceleration a1 is calculated according to a formula:

$$a1 = \begin{cases} -\dfrac{(VehSpd_{kph} - FroVehSpd_{kph})^2}{3.6*3.6*2*(RelaDis_m - SfDis_m)} * \dfrac{VehSpd_{kph}}{FroVehSpd_{kph}} * \dfrac{ExpDis_m}{RelaDis_m} \quad SfDis\_m < RelaDis\_m < ExpDis\_m \\ -\dfrac{(VehSpd\_kph - FroVehSpd\_kph)^2}{3.6*3.6*2*(RelaDis\_m - AEBDis\_m)} * \dfrac{VehSpd\_kph}{FroVehSpd\_kph} * \dfrac{ExpDis\_m}{RelaDis\_m} \quad AEBDis\_m < RelaDis\_m < SfDis\_m \\ -8 \qquad\qquad RelaDis_m < AEBDis\_m \end{cases}$$

$$(4),$$

In the formula, ExpDis_m represents the desired distance.
According to the formula (4), the first acceleration a1 may be calculated for three cases. It is determined that a range of the first acceleration a1 is $a1 \in [-8, 1]$. According to the formula (4):

when the distance RelaDis m between the two vehicles is *SfDis_m<RelaDis_m<ExpDis_m,*

$$a1 = -\frac{(VehSpd\_kph - FroVehSpd\_kph)^2}{3.6*3.6*2*(RelaDis\_m - SfDis\_m)} \frac{VehSpd\_kph}{FroVehSpd\_kph} \frac{ExpDis\_m}{RelaDis\_m},$$

when the distance RelaDis m between the two vehicles is *AEBDis_m<RelaDis_m<SfDis_m,*

$$a1 = -\frac{(VehSpd\_kph - FroVehSpd\_kph)^2}{3.6*3.6*2*(RelaDis\_m - AEBDis\_m)} \frac{VehSpd\_kph}{FroVehSpd\_kph} \frac{ExpDis\_m}{RelaDis\_m},$$

and

when the distance RelaDis_m between the two vehicles is *RelaDis_m<AEBDis_m*, the vehicle switches from the following mode to the AEB mode. The AEB control is performed and acceleration is equal to -8m/s².

It should be noted that in the formulas according to the embodiments of the present invention, acceleration with a negative sign "-" indicates "acceleration of decelerating" or "deceleration".

2. The second working condition and a second control algorithm corresponding to the second working condition

The second control algorithm is used for controlling the ego vehicle in the second working condition to decelerate at second acceleration. That is, in the second working condition, the ego vehicle is controlled to decelerate.
In a more preferred embodiment, a process of calculating the second acceleration is described. The second acceleration a2 is calculated according to the following formula:

$$a2 = -\frac{(VehSpd\_kph - FroVehSpd\_kph)^2}{3.6*3.6*2*(RelaDis\_m - ExpDis\_m)} * K_1 \qquad (5).$$

In the formula, K1 represents a constant used for compensating for a delay effect of the control algorithm. When the vehicle longitudinal control (VLC) system performs longitudinal control on the vehicle, there is a delayed response. $K_1$ is used for compensating for the delayed response of the VLC system.

3. The third working condition and a third control algorithm corresponding to the third working condition

The third control algorithm is used for controlling the ego vehicle in the third working condition to accelerate at third acceleration. That is, in the third working condition, the ego vehicle is controlled to accelerate.
In a preferred embodiment, in the third control algorithm, the third acceleration a3 is calculated according to the following formula:

$$a3 = \begin{cases} k31, & C31 \\ k32, & C32 \\ k33, & C33 \\ k34, & C34 \end{cases}.$$

In the formula, C31 to C34 respectively represent different acceleration states, and k31 to k34 respectively represent accelerations corresponding to different acceleration states. Based on the speed of the front vehicle and a distance between the front vehicle and the ego vehicle, the acceleration states in the third working condition is divided into four sub-states which are respectively represented by C31 to C34. The four sub-states respectively correspond to different accelerations, which are represented by k31 to k34.
In other embodiments, the third acceleration a3 is calculated according to the following formula:

$$a3 = \frac{FroVehSpd\_kph}{VehSpd\_kph} * \frac{RelaDis\_m}{ExpDis\_m} * K_1 \qquad (6),$$

In the formula, $K_1$ represents a constant. For example, $K_1$ is equal to 0.3. In the third condition, a range of the third acceleration a3 is $\alpha3 \in [0, 0.8]$.

4. The fourth working condition and a fourth control algorithm corresponding to the fourth working condition

The fourth control algorithm is used for controlling the ego vehicle in the fourth working condition to decelerate at fourth acceleration. That is, in the fourth working condition, the ego vehicle is controlled to decelerate.

In a preferred embodiment, in the fourth control algorithm, the fourth acceleration a4 is calculated according to the following formula:

$$a4 = \begin{cases} k41, & C41 \\ k42, & C42 \\ k43, & C43 \\ k44, & C44 \end{cases}.$$

In the formula, C41 to C44 respectively represent different deceleration states, and k41 to k44 respectively represent accelerations corresponding to different deceleration states.

In other embodiments, a process of calculating the fourth acceleration is described. The fourth acceleration a4 is calculated according to the following formula:

$$a4 = -\frac{FroVehSpd\_kph}{VehSpd\_kph} * \frac{ExpDis\_m}{RelaDis\_m} * K_1 \qquad (7).$$

In the formula, $K_1$ represents a constant. For example, $K_1$ is equal to 0.2. In the fourth condition, a range of the fourth acceleration a4 is a4 $\in$ [-0.8, 1].

5. The fifth working condition and a fifth control algorithm corresponding to the fifth working condition

In the fifth working condition, a difference between the speed of the front vehicle and the speed of the ego vehicle is within a set speed threshold range, and a real distance between the front vehicle and the ego vehicle is within a set distance threshold range, so that the ego vehicle follows the front vehicle stably at an approximately uniform speed.

The fifth control algorithm is used for controlling the ego vehicle in the fifth working condition to follow the front vehicle stably.

In other embodiments, when a requirement for the state of the ego vehicle stably following the front vehicle is not high, the fifth control algorithm may be used for controlling the ego vehicle to follow the front vehicle stably at fifth acceleration a5. The fifth acceleration a5 is calculated according to the following formula:

$$a5 = (FroVehSpd\_kph - VehSpd\_kph) * k_p .$$

In the formula, VehSpd _kph represents the speed of the ego vehicle, FroVehSpd_kph represents the speed of the front vehicle, and kp represents a proportionality coefficient.

As described above, in the following mode, a match is performed on the control algorithms corresponding to the above five working conditions based on the speed of the front vehicle, the speed of the ego vehicle and the real distance between the front vehicle and the ego vehicle. When this vehicle is in a working condition, a control algorithm corresponding to the working condition is performed, which has a good control effect, thereby improving efficiency, safety and comfortableness of the control algorithm.

In step S130, when the automatic driving vehicle is in the cruise mode, a cruise control is performed.

Figure 4 is a flowchart of a cruise control according to an embodiment of the present invention. As shown in Figure 4, the cruise control includes the following steps S131 to S134.

In step S131, a current speed of the ego vehicle in the cruise mode is acquired, and a relative speed difference between the current speed and a maximum drivable speed of the ego vehicle is calculated.

The current speed may be acquired by a vehicle sensor (for example, an inertial navigation device) of the ego vehicle or by an electronic control unit (ECU) of the vehicle through a CAN bus.

The maximum drivable speed of the ego vehicle is determined by a maximum speed management module in ADS of the automatic driving vehicle. The maximum speed management module belongs to a decision making system of the automatic driving vehicle. The maximum speed management module is configured to acquire maximum drivable speeds of the vehicle corresponding to driving scenario information, driving environment information and road condition information, to form a set of maximum drivable speeds; and determine a proper maximum speed according to actual conditions as the maximum drivable speed of the ego vehicle.

Functions of the maximum speed management module are described in detail according to the driving scenario, the driving environment and the road condition.

1) According to different driving scenarios, the maximum speed is affected by the following factors. I. A maximum speed V1 is predetermined by the ADS. II. A maximum speed V2 is dependent on a width of a drivable area in front of the automatic driving vehicle. III. When a passenger is within a predetermined area in a lane (non-emergency lane) adjacent to the lane in which the automatic driving vehicle drives, the vehicle decelerates and a maximum speed V3 is set. IV A maximum speed V4 is dependent on a distance between the automatic driving vehicle and a highway exit (a ramp exit, a toll station and the like). V. the automatic driving vehicle decelerates to a maximum speed V5, when the automatic driving vehicle is located at a predetermined distance to a merging point. VI. When the automatic driving vehicle is required to switch to an adjacent lane at a specific working condition (for example, parallel flow, shunting, leaving the highway, driving into a fork and the like), a maximum speed V6 is set based on speeds of vehicles in a left front area and a right front area of the vehicle. VII. A maximum speed V7 is set based on an object directly in front of the automatic driving vehicle in a lane change process of the automatic driving vehicle. VIII, A maximum speed V8 is set when a vehicle drives side by side with the automatic driving vehicle in an adjacent lane and the automatic driving vehicle overtakes that vehicle.

2) For different driving environments, the maximum speed is affected by the following factors. I. Different roads have different speed limits, and a maximum speed limit V9 is identified and outputted based on a high definition map (HDM) and a vision sensor. II, a maximum speed V10 of the automatic driving vehicle is limited based on driving environment factors, such as light intensity, fog, rain and snow, hail, and the like.

3) For different road conditions, the maximum speed is affected by the following factors. I. a curvature of a road, a maximum speed V11 of the automatic driving vehicle is determined based on a curvature of a road. II. A roughness of a road, a maximum speed V12 of the automatic driving vehicle is determined based on dynamic information of the vehicle, such as a vertical acceleration, a transverse force, a slope and the like. III. An adhesion coefficient of a road, a maximum speed V13 of the automatic driving vehicle is limited based on the adhesion coefficient of the current road detected by a sensor of the automatic driving vehicle.

Accordingly, a set of maximum speeds {VI, ...... V13} is obtained, and a proper speed V0 is selected based on actual conditions as the maximum speed V at which the automatic driving vehicle is allowed to drive on the current road. In addition, if V0 is determined based on environmental factors (rain, snow, fog, and the like) or the adhesion coefficient of the road, in the case that a vehicle is adjacent to the automatic driving vehicle, V0 is actively reduced by 10% and the maximum speed V of the system is V=0.9*V0. If V0 is not determined based on environmental factors (rain, snow, fog, and the like) or the adhesion coefficient of the road, when a vehicle is adjacent to the automatic driving vehicle, the maximum speed V of the system is equal to V8. In the case of no vehicle adjacent to the automatic driving vehicle, the maximum speed V is equal to V0.

The maximum drivable speed of the ego vehicle determined according to the embodiment of the present invention, compared with a maximum speed determined with a conventional method, is more practical, applied to more scenarios, more in line with people's driving habits. In this way, an illegal behavior and an accident such as collision or skidding caused by excessive speed of the automatic driving vehicle can be avoided, and the driving safety of the automatic driving vehicle, and safety and ride comfortableness of the driver can be ensured.

In step S132, the relative speed difference is corrected to cause a variation of the relative speed difference in a control period to be within a predetermined range.

For step S132, in a preferred embodiment, a rate limiting module is configured to correct the relative speed difference. The rate limiting module, for example, may be a rate limiter module in Simulink. The rate limiting module is configured to correct a great variation of the relative speed difference in one operation period due to the variation of the maximum drivable speed of the ego vehicle. The great variation of the relative speed difference may lessen a comfortableness of cruise control of the automatic driving vehicle. The introduced rate limiting module avoids the above case. Based on simulation and real vehicle test, it is verified that the rate limiting module improves the cruise control effect greatly. In addition, parameter setting in the rate limiting module is calibrated based on the real vehicle test.

In step S133, an acceleration of the ego vehicle is calculated based on the corrected relative speed difference.

In a preferred embodiment, the acceleration a of the ego vehicle is calculated according to the following formula:

$$a= ( TopSpd\_kph - VehSpd\_kph ) *Kp .$$

In the formula, TopSpd _kph represents the maximum speed, VehSpd _kph represents the current speed, and Kp represents a proportionality parameter of a P control. The P control is refers to the P control in a conventional proportion integration differentiation (PID) control.

For Kp, the cruise control relates to an acceleration control and a deceleration control. The vehicle accelerates when the speed of the ego vehicle is less than the maximum speed, and the vehicle decelerates when the speed of the ego vehicle is greater than the maximum speed. A mechanism for performing the acceleration control and a mechanism for performing the deceleration control have different response speeds and accuracies, so that Kp in acceleration is different from that in deceleration. Preferably, the proportionality parameter Kp is determined according to the following formula:

$$Kp = \begin{cases} K_0, & VehSpd\_kph < TopSpd\_kph \\ K_1, & VehSpd\_kph \geq TopSpd\_kph \end{cases}.$$

In the formula, $K_0$ represent a first parameter corresponding to an optimal ride experience in the acceleration working condition of the vehicle, which is determined in the real vehicle test. $K_1$ represent a second parameter corresponding to an optimal ride experience in the deceleration working condition of the vehicle, which is determined in the real vehicle test. $K_0$ and $K_1$ are scalars determined in the real vehicle test.

In step S134, the speed of the ego vehicle in the cruise mode is adjusted based on the acceleration of the ego vehicle.

After the proper acceleration is determined by steps S131 to S133, the speed of the ego vehicle in the cruise mode is adjusted in step S134 by controlling the ego vehicle to accelerate or decelerate.

In some cases, the acceleration of this vehicle calculated in step S133 may not be ideal. For example, the calculated acceleration is greater than acceleration at which an actual driver drives a vehicle within a particular speed range under the same condition. For this case, in a preferred embodiment, in step S134, limiting correction is performed on the acceleration of the ego vehicle, and the speed of the ego vehicle in the cruise mode is adjusted based on the limiting-corrected acceleration of the ego vehicle. In this way, by limiting the acceleration, the acceleration used for controlling the speed of the vehicle is proper.

Further, an upper limit Up of acceleration is determined by looking up a table. Maximum acceleration of the vehicle is determined based on the speed of the ego vehicle. That is, when the calculated acceleration a of the vehicle is greater than the upper limit Up, this vehicle actually drives at acceleration of the upper limit Up. Otherwise, the vehicle actually drives at the calculated acceleration. That is, $\alpha_{\text{Taracce}} = \text{MIN}(Up, a)$. In an embodiment, the upper limit Up is determined according to the following formula:

$$Up = \begin{cases} a1 & VehSpd\_kph < b1 * TopSpd\_kph \\ a2 & b1 * TopSpd\_kph \leq VehSpd\_kph < b2 * TopSpd\_kph \\ a3 & b2 * TopSpd\_kph \leq VehSpd\_kph < b3 * TopSpd\_kph \\ a4 & b3 * TopSpd\_kph \leq VehSpd\_kph < b4 * TopSpd\_kph \\ a5 & b4 * TopSpd\_kph \leq VehSpd\_kph < b5 * TopSpd\_kph \\ a6 & b5 * TopSpd\_kph \leq VehSpd\_kph < b6 * TopSpd\_kph \\ a7 & b6 * TopSpd\_kph \leq VehSpd\_kph < TopSpd\_kph \\ a8 & VehSpd\_kph \geq TopSpd\_kph \end{cases}.$$

A lower limit of acceleration is determined in a similar way. b1 to b6 are constants that increase sequentially and are less than 1. For example, b1 to b6 are respectively equal to 0.35, 0.45, 0.55, 0.65, 0.75, and 0.85. a1 to a8 are set values that decrease sequentially.

Therefore, in the embodiments of the present invention, on the basis of implementing the cruise control, the comfortableness of the control is optimized. By analyzing test data in the real vehicle test and the simulation test, good control effect is achieved, and efficiency, safety and comfortableness for the cruise control algorithm and the longitudinal control algorithm are improved.

Further, the longitudinal control method further includes: in the AEB mode of the automatic driving vehicle, an AEB control is performed. In an embodiment of the present invention, the AEB control includes: when the longitudinal decision transmits a signal of AEB mode, the automatic driving vehicle brakes at great deceleration without considering comfortableness in the vehicle braking process. Braking deceleration ranges from 0.7g to 0.9g, where g represents the gravitational acceleration. For example, the deceleration is equal to -8m/s$^2$.

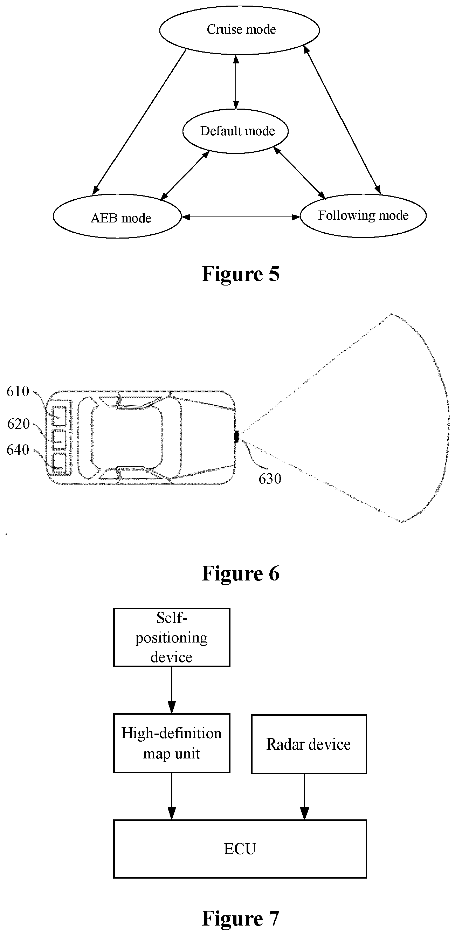

Figure 5 is a schematic diagram of a switch between longitudinal modes according to an embodiment of the present invention. As shown in Figure 5, before the intelligent driving system of the automatic driving vehicle is turned on, a program is in a default mode (that is, the program is standby and does not control the vehicle). After the intelligent driving system is turned on, the program switches from the default mode to an operation mode, that is, the cruise mode, the AEB mode, and the following mode, based on environmental information and the like. In a driving process of the automatic driving vehicle, the program generally switches from the cruise mode to the AEB mode or the following mode. The program may switch from the following mode to the cruise mode or the AEB mode. The program may switch between the cruise mode and the following mode or between the AEB mode and the following mode. The program may switch between the cruise mode and the default mode, between the AEB mode and the default mode, or between the following mode and the default mode.

As described above, in the longitudinal control method for the automatic driving vehicle according to the embodiments of the present invention, corresponding controlling algorithm is performed based on an instruction transmitted by the longitudinal decision, to control the vehicle to accelerate or decelerate, so as to adjust the speed of the vehicle. In this way, a control for the cruise mode, the following mode and the AEB mode is realized.

A machine-readable control medium is further provided according to another embodiment of the present invention. The machine-readable control medium stores instructions used for controlling a machine to perform the longitudinal control method for the automatic driving vehicle described above. The machine-readable control medium includes, but is not limited to, various mediums that are capable of storing a program code, such as a phase change memory (PRAM), a static random access memory (SRAM), a dynamic random access memory (DRAM), other random access memory (RAM), a read-only memory (ROM), an electrically erasable programmable read only memory (EEPROM), a flash memory or other memory, a CD-ROM read-only memory (CD-ROM), a digital versatile disc (DVD) or other optical storage, a magnetic cassette tape, a magnetic tape disk storage or other magnetic storage devices.

A processor is further provided according to another embodiment of the present invention. The processor is configured to execute a program. The program is used to perfom the longitudinal control method for the automatic driving vehicle described above, when be executed.

Figure 6 is a schematic structural diagram of a longitudinal control system for an automatic driving vehicle according to an embodiment of the present invention. As shown in Figure 6, the longitudinal control system includes a positioning unit 610, a map unit 620, a detection unit 630, the readable storage medium described above and a processor 640. The positioning unit 610 is configured to acquire current position information of the automatic driving vehicle. The map unit 620 is connected to the positioning unit 610 through a signal and is configured to output map information around the automatic driving vehicle based on the current position information. The detection unit 630 is configured to detect information of an obstacle around the automatic driving vehicle. The processor 640 is connected to the map unit 620 and the detection unit 630 through signals, and is configured to acquire the map information and the information of the obstacle from acquisition devices, acquire information of an object in front of the automatic driving vehicle based on the map information and the information of the obstacle, and execute the instruction stored in the machine-readable storage medium based on the information of the object in front of the automatic driving vehicle, where the instruction, when being executed by a machine, causes the machine to perform the longitudinal control method for the automatic driving vehicle described above.

For the longitudinal control system, the positioning unit 610 is a self-positioning device, and is preferably a high-precision PGS positioning device. The positioning unit 610 is configured to provide current position information of the vehicle. The current position information includes current longitude and latitude information, heading angle information of the vehicle and the like. A horizontal positioning deviation is within 10cm, and a longitudinal positioning deviation is within 30cm. The map unit 620, for example, is configured to store and output high-precision map data information. Preferably, a map unit with a storage space greater than 50G and a processing memory greater than 1G is used. In addition, the map unit 620 outputs, based on the current position information of the vehicle provided by the positioning unit 610, various attribute information of a road in a range of 200 meters in front and rear of the automatic driving vehicle provided by the high-definition map in a real-time manner. The detection unit 630, for example, is configured to detect and extract an obstacle within 360° around the automatic driving vehicle. Preferably, an all-weather sensor detection device is used to avoid unstable object detection caused by rain, snow, fog, illumination and the like. The detection unit 630 is not limited to be mounted on a current position, and the number of the detection unit 630 is not limited to a current number. In order to improve accuracy of object detection, a radar sensor (a laser radar, a millimeter wave radar device and the like) or a vision sensor may be arranged at the front of the vehicle. Similarly, two angle radar devices may be mounted respectively at a front left corner and a front right corner of the vehicle to reduce false detection and missed detection of an object through device redundancy. The processor 640 provides information of the front object, based on the map information provided by the map unit 620 and the information of the obstacle provided by the detection unit 630; and thus execute the instruction stored in the machine-readable storage medium, to perform the longitudinal control method for the automatic driving vehicle described above.

In a preferred embodiment, the processor 640 may be the processor configured to execute a program described in the above embodiment. The program, when being executed, performs the control method of lane change for a vehicle abnormality according to the above embodiments. In this case, the longitudinal control system for the automatic driving vehicle may not include the machine-readable storage medium.

The processor 640 may be an ECU (electronic control unit) of the vehicle or an independently configured general controller such as a CPU, a single-chip microcomputer, a DSP (digital signal processor), an SOC (system on a chip) and the like. It can be understood that the independent controllers may be integrated in the ECU. The processor 640 is preferably a controller that has a fast operation speed and many IO port devices. The processor 640 is required to have input and output ports capable of communicating with the CAN of the vehicle, input and output ports for a switch signal, a network cable interface, and the like.

Figure 7 is a schematic diagram of a communication of an exemplary longitudinal control system for an automatic driving vehicle according to an embodiment of the present invention. In the example, the longitudinal control system includes a self-positioning device serving as the positioning unit 610, a high-definition map unit serving as the map unit 620, a radar device serving as the detection unit 630, and an ECU serving as the processor 640. The self-positioning device includes a GPS, a high-precision wheel speed sensor, a gyroscope sensor and like, which is configured to detect position information of the vehicle including current latitude and longitude of the vehicle, heading angle information of the vehicle and the like. The high-definition map unit includes a high-definition map (HD map) storage unit and a data operating and processing unit. The high-definition map unit is configured to store and properly process the position information of the vehicle and the like to output map information such as longitudes and latitudes (taking the earth's core as an origin) of discrete points on a lane line, heading angles (due north serving as 0° and clockwise being a positive direction) of the discrete points, a type of the lane line, a width of each lane, the number of lanes, and road boundary based on a high-definition map in a range of 200 meters in front and rear of the automatic driving vehicle. The high-definition map unit may output the map information to the ECU through a user datagram protocol (UDP) communication. The radar device includes an optical transmitting system and an optical receiving system. The number and arrangement of the radar device may be set based on the type of the vehicle and requirements of the vehicle. The radar device may transmit information of a detected obstacle to the ECU through the CAN communication. The ECU adopts configuration of a CPU. The ECU includes readable storage mediums including an ROM, an RAM, and a Flash Memory. The readable storage mediums store algorithm programs about the longitudinal control method described above.

It should be noted that details and effects of the machine-readable storage medium and the longitudinal control system for the automatic driving vehicle according to the embodiments of the present invention refer to the embodiments of the longitudinal control method for the automatic driving vehicle, which will not be repeated herein.

Only preferred embodiments of the present invention are described above. Modifications are possible within the scope of the invention as defined by the appended claims.

**Claims**

1. A longitudinal control method for an automatic driving vehicle, comprising:

   detecting (S110) a current longitudinal mode of the automatic driving vehicle, wherein the longitudinal mode comprises a cruise mode, a following mode, and an autonomous emergency braking, AEB, mode;
   in the following mode (S120) of the automatic driving vehicle,

   determining a control algorithm corresponding to a current working condition based on a pre-configured correspondence relationship between working conditions of the automatic driving vehicle in the following mode and control algorithms, wherein the control algorithm is used for controlling a speed change of the automatic driving vehicle in a corresponding working condition; and
   controlling, based on the determined control algorithm, the automatic driving vehicle to perform a following movement; and

   in the cruise mode (S130) of the automatic driving vehicle,

   acquiring (S131) a current speed of the automatic driving vehicle in the cruise mode, and calculating a relative speed difference between the current speed and a maximum drivable speed of an ego vehicle;
   correcting (S132) the relative speed difference to cause a variation of the relative speed difference in a control period to be within a predetermined range;
   calculating (S133) an acceleration of the ego vehicle based on the corrected relative speed difference; and
   adjusting a speed of the ego vehicle in the cruise mode based on the acceleration of the ego vehicle,

**characterized in that**

the pre-configured correspondence relationship comprises a first working condition in which a speed of a front vehicle is less than a speed of the ego vehicle and a real distance between the front vehicle and the ego vehicle is less than a desired distance, and a first control algorithm used for controlling the ego vehicle in the first working condition to decelerate at a first acceleration, wherein

in the first control algorithm, the first acceleration a1 is calculated according to a formula:

$$a1 = \begin{cases} -\dfrac{\left(VehSpd_{kph} - FroVehSpd_{kph}\right)^2}{3.6*3.6*2*(RelaDis_m - SfDis_m)} * \dfrac{VehSpd_{kph}}{FroVehSpd_{kph}} * \dfrac{ExpDis_m}{RelaDis_m} & SfDis\_m < RelaDis\_m < ExpDis\_m \\ -\dfrac{(VehSpd\_kph - FroVehSpd\_kph)^2}{3.6*3.6*2*(RelaDis\_m - AEBDis\_m)} * \dfrac{VehSpd\_kph}{FroVehSpd\_kph} * \dfrac{ExpDis\_m}{RelaDis\_m} & AEBDis\_m < RelaDis\_m < SfDis\_m \\ -8 & RelaDis_m < AEBDis\_m \end{cases}$$

$$AEBDis\_m = (VehSpd\_kph - FroVehSpd\_kph)*TTC/3.6$$

$$TTC = \begin{cases} \dfrac{RelaDis_m * 3.6}{VehSpd\_kph - FroVehSpd\_kph}, & VehSpd_{kph} > FroVehSpd\_kph \\ 1000, & VehSpd_{kph} \leq FroVehSpd\_kph \end{cases}$$

$$SfDis_m = 0.8509 * FroVehSpd\_kph + c$$

wherein VehSpd_kph represents the speed of the ego vehicle, FroVehSpd_kph represents the speed of the front vehicle, ExpDis_m represents the desired distance, RelaDis_m represents the real distance between the front vehicle and the ego vehicle, SfDis_m represents a safe distance, AEBDis_m represents a braking distance, TTC represents a collision time, and c represents a constant, and

wherein the safe distance indicates a demanded minimum distance between the front vehicle and the ego vehicle in a case that the ego vehicle has the same speed as the front vehicle; and

the braking distance indicates a distance threshold between the front vehicle and the ego vehicle when the automatic driving vehicle switches from the following mode to the AEB mode.

2. The longitudinal control method for the automatic driving vehicle as claimed in claim 1, wherein the correspondence relationship between working conditions of the automatic driving vehicle in the following mode and control algorithms comprises any one or more of:

a second working condition in which the speed of the front vehicle is less than the speed of the ego vehicle and the real distance between the front vehicle and the ego vehicle is greater than the desired distance, and a second control algorithm used for controlling the ego vehicle in the second working condition to decelerate at a second acceleration;

a third working condition in which the speed of the front vehicle is greater than the speed of the ego vehicle and the real distance between the front vehicle and the ego vehicle is greater than the desired distance, and a third control algorithm used for controlling the ego vehicle in the third working condition to accelerate at a third acceleration;

a fourth working condition in which the speed of the front vehicle is greater than the speed of the ego vehicle and the real distance between the front vehicle and the ego vehicle is less than the desired distance, and a fourth control algorithm used for controlling the ego vehicle in the fourth working condition to decelerate at a fourth acceleration; and

a fifth working condition in which a difference between the speed of the front vehicle and the speed of the ego vehicle is within a set speed threshold range and the real distance between the front vehicle and the ego vehicle is within a set distance threshold range, and a fifth control algorithm used for controlling the ego vehicle in the fifth working condition to follow the front vehicle stably.

3. The longitudinal control method for the automatic driving vehicle as claimed in claim 2, wherein in the second control algorithm, the second acceleration a2 is calculated according to a formula:

$$a2 = -\frac{(VehSpd\_kph - FroVehSpd\_kph)^2}{3.6 * 3.6 * 2 * (RelaDis\_m - ExpDis\_m)} * K_1$$

wherein VehSpd _kph represents the speed of the ego vehicle, FroVehSpd_kph represents the speed of the front vehicle, ExpDis_m represents the desired distance, RelaDis_m represents the real distance between the front vehicle and the ego vehicle, and $K_1$ represents a constant used for compensating for a delay effect of a control algorithm.

4. The longitudinal control method for the automatic driving vehicle as claimed in claim 2, wherein in the third control algorithm, the third acceleration a3 is calculated according to a formula:

$$a3 = \begin{cases} k31, & C31 \\ k32, & C32 \\ k33, & C33 \\ k34, & C34 \end{cases}$$

wherein C31 to C34 respectively represent different acceleration states, and k31 to k34 respectively represent accelerations corresponding to different acceleration states; and/or
in the fourth control algorithm, the fourth acceleration a4 is calculated according to a formula:

$$a4 = \begin{cases} k41, & C41 \\ k42, & C42 \\ k43, & C43 \\ k44, & C44 \end{cases}$$

wherein C41 to C44 respectively represent different deceleration states, and k41 to k44 respectively represent accelerations corresponding to different deceleration states.

5. The longitudinal control method for the automatic driving vehicle as claimed in claim 2, wherein in the fifth control algorithm, the fifth acceleration a5 is calculated according to a formula:

$$a5 = (FroVehSpd\_kph - VehSpd\_kph) * k_p$$

wherein VehSpd _kph represents the speed of the ego vehicle, FroVehSpd_kph represents the speed of the front vehicle, and Kp represents a proportionality coefficient.

6. The longitudinal control method for the automatic driving vehicle as claimed in claim 1, wherein the calculating acceleration of the ego vehicle comprises: calculating the acceleration a of the ego vehicle according to a formula:

$$a = (TopSpd\_kph\text{-}VehSpd\_kph) * Kp$$

wherein TopSpd _kph represents a maximum speed, VehSpd _kph represents the current speed, Kp represent a proportionality parameter of P control, and
wherein the proportionality parameter Kp is determined according to a formula:

$$Kp = \begin{cases} K_0, & VehSpd\_kph < TopSpd\_kph \\ K_1, & VehSpd\_kph \geq TopSpd\_kph \end{cases}$$

wherein $K_0$ represent a first parameter which corresponds to an optimal ride experience in an acceleration working condition of a vehicle and is determined in a real vehicle test, and $K_1$ represent a second parameter which corresponds to an optimal ride experience in a deceleration working condition of the vehicle and is determined in the real vehicle test.

7. The longitudinal control method for the automatic driving vehicle as claimed in claim 1, further comprising:
in the AEB mode of the automatic driving vehicle, controlling the automatic driving vehicle to brake at a braking deceleration ranging from 0.7g to 0.9g, wherein g represents a gravitational acceleration.

8. A machine-readable storage medium, wherein the machine-readable storage medium stores instructions used for controlling a machine to perform the longitudinal control method for the automatic driving vehicle as claimed in any one of claims 1 to 7.

9. A processor, wherein the processor is configured to execute a program to perform the longitudinal control method for the automatic driving vehicle as claimed in any one of claims 1 to 7.

10. A longitudinal control system for an automatic driving vehicle, comprising:

a positioning unit (610) configured to acquire current position information of the automatic driving vehicle;
a map unit (620) connected to the positioning unit through a signal, and configured to output map information around the automatic driving vehicle based on the current position information;
a detection unit (630) configured to detect information of an obstacle around the automatic driving vehicle; and
the processor as claimed in claim 9, wherein the processor (640) is connected to the map unit and the detection unit through signals, and is configured to acquire information of an object in front of the automatic driving vehicle based on the map information and the information of the obstacle, and perform a longitudinal control on a vehicle based on the information of the object in front of the automatic driving vehicle.


**Patentansprüche**

1. Längssteuerverfahren für ein automatisch fahrendes Fahrzeug, mit den Schritten:

Erkennen (S110) eines gegenwärtigen Längsmodus des automatisch fahrenden Fahrzeugs, wobei der Längsmodus einen Fahrmodus, einen Folgemodus und einen autonomen Notbremsmodus (AEB) umfasst;
wobei im Folgemodus (S120) des automatisch fahrenden Fahrzeugs die folgenden Schritte durchgeführt werden:

Bestimmen eines Steueralgorithmus, der einer gegenwärtigen Betriebsbedingung entspricht, basierend auf einer vorkonfigurierten Korrespondenzbeziehung zwischen Betriebsbedingungen des automatisch fahrenden Fahrzeugs in dem Folgemodus und Steueralgorithmen, wobei der Steueralgorithmus zum Steuern einer Geschwindigkeitsänderung des automatisch fahrenden Fahrzeugs unter einer entsprechenden Betriebsbedingung verwendet wird; und
Steuern, basierend auf dem bestimmten Steueralgorithmus, des automatisch fahrenden Fahrzeugs, um eine Folgebewegung auszuführen; und
wobei im Fahrmodus (S130) des automatisch fahrenden Fahrzeugs die folgenden Schritte durchgeführt werden:

Erfassen (S131) einer gegenwärtigen Geschwindigkeit des automatisch fahrenden Fahrzeugs im Fahrmodus, und Berechnen einer relativen Geschwindigkeitsdifferenz zwischen der gegenwärtigen Geschwindigkeit und einer maximal fahrbaren Geschwindigkeit eines Eigenfahrzeugs;
Korrigieren (S132) der relativen Geschwindigkeitsdifferenz, um zu bewirken, dass eine Abweichung der relativen Geschwindigkeitsdifferent in einer Steuerperiode innerhalb eines vorbestimmten Bereichs liegt;
Berechnen (S133) einer Beschleunigung des Eigenfahrzeugs basierend auf der korrigierten relativen Geschwindigkeitsdifferenz; und
Einstellen einer Geschwindigkeit des Eigenfahrzeugs im Fahrmodus basierend auf der Beschleunigung des Eigenfahrzeugs,
**dadurch gekennzeichnet,**
**dass** die vorkonfigurierte Korrespondenzbeziehung eine erste Betriebsbedingung, in welcher eine Geschwindigkeit eines vorausfahrenden Fahrzeugs geringer als eine Geschwindigkeit des Eigenfahrzeugs ist und ein tatsächlicher Abstand zwischen dem vorausfahrenden Fahrzeug und dem Eigenfahrzeug geringer als ein gewünschter Abstand ist, und einen ersten Steueralgorithmus, der zum Steuern des Eigenfahrzeugs unter der ersten Betriebsbedingung verwendet wird, um mit einer ersten Beschleunigung zu verlangsamen, wobei in dem ersten Steueralgorithmus die erste Beschleunigung a1 berechnet wird gemäß einer Formel

$$
a1 = \begin{cases} -\dfrac{\left(VehSpd_{kph} - FroVehSpd_{kph}\right)^2}{3.6 * 3.6 * 2 * (RelaDis_m - SfDis_m)} * \dfrac{VehSpd_{kph}}{FroVehSpd_{kph}} * \dfrac{ExpDis_m}{RelaDis_m} & SfDis\_m < RelaDis\_m < ExpDis\_m \\[4mm] -\dfrac{\left(VehSpd\_kph - FroVehSpd\_kph\right)^2}{3.6 * 3.6 * 2 * (RelaDis\_m - AEBDis\_m)} * \dfrac{VehSpd\_kph}{FroVehSpd\_kph} * \dfrac{ExpDis\_m}{RelaDis\_m} & AEBDis\_m < RelaDis\_m < SfDis\_m \\[4mm] -8 & RelaDis_m < AEBDis\_m \end{cases}
$$

$$AEBDis\_m = (VehSpd\_kph - FroVehSpd\_kph) * TTC/3.6$$

$$
TTC = \begin{cases} \dfrac{RelaDis_m * 3.6}{VehSpd\_kph - FroVehSpd\_kph}, & VehSpd_{kph} > FroVehSpd\_kph \\[4mm] 1000, & VehSpd_{kph} \le FroVehSpd\_kph \end{cases}
$$

$$SfDis_m = 0.8509 * FroVehSpd\_kph + c$$

wobei VehSpd_kph die Geschwindigkeit des Eigenfahrzeugs angibt, FroVehSpd_kph die Geschwindigkeit des vorausfahrenden Fahrzeugs angibt, ExpDis_m den gewünschten Abstand angibt, RelaDis_m den tatsächlichen Abstand zwischen dem vorausfahrenden Fahrzeug und dem Eigenfahrzeug angibt, SfDis_m einen sicheren Abstand angibt, AEBDis_m einen Bremsweg angibt, TTC eine Kollisionszeit angibt, und c eine Konstante angibt, und
wobei der sichere Abstand einen erforderlichen Mindestabstand zwischen dem vorausfahrenden Fahrzeug und dem Eigenfahrzeug in einem Fall angibt, dass das Eigenfahrzeug dieselbe Geschwindigkeit wie das vorausfahrende Fahrzeug aufweist; und
der Bremsweg einen Abstandsschwellenwert zwischen dem vorausfahrenden Fahrzeug und dem Eigenfahrzeug angibt, wenn das automatisch fahrende Fahrzeug vom Folgemodus in den AEB-Modus wechselt.

2. Längssteuerverfahren für das automatisch fahrende Fahrzeug nach Anspruch 1, bei welchem die Korrespondenzbeziehung zwischen Betriebsbedingungen des automatisch fahrenden Fahrzeugs im Folgemodus und Steueralgorithmen einen oder mehrere der folgenden Bedingungen aufweist:

eine zweite Betriebsbedingung, bei welcher die Geschwindigkeit des vorausfahrenden Fahrzeugs geringer als die Geschwindigkeit des Eigenfahrzeugs ist und der tatsächliche Abstand zwischen dem vorausfahrenden Fahrzeug und dem Eigenfahrzeug größer als der gewünschte Abstand ist, und einen zweiten Steueralgorithmus, der zum Steuern des Eigenfahrzeugs unter der zweiten Betriebsbedingung verwendet wird, um mit einer zweiten Beschleunigung zu verlangsamen,
eine dritte Betriebsbedingung, bei welcher die Geschwindigkeit des vorausfahrenden Fahrzeugs höher als die Geschwindigkeit des Eigenfahrzeugs ist und der tatsächliche Abstand zwischen dem vorausfahrenden Fahrzeug und dem Eigenfahrzeug größer als der gewünschte Abstand ist, und einen dritten Steueralgorithmus, der zum Steuern des Eigenfahrzeugs unter der dritten Betriebsbedingung verwendet wird, um mit einer dritten Beschleunigung zu beschleunigen;
eine vierte Betriebsbedingung, bei welcher die Geschwindigkeit des vorausfahrenden Fahrzeugs höher als die Geschwindigkeit des Eigenfahrzeugs ist und der tatsächliche Abstand zwischen dem vorausfahrenden Fahrzeug und dem Eigenfahrzeug geringer als der gewünschte Abstand ist, und einen vierten Steueralgorithmus, der zum Steuern des Eigenfahrzeugs unter der vierten Betriebsbedingung verwendet wird, um mit einer vierten Beschleunigung zu verlangsamen; und
eine fünfte Betriebsbedingung, bei welcher eine Differenz zwischen der Geschwindigkeit des vorausfahrenden Fahrzeugs und der Geschwindigkeit des Eigenfahrzeugs innerhalb eines Sollgeschwindigkeitsschwellenwertbereichs liegt, und der tatsächliche Abstand zwischen dem vorausfahrenden Fahrzeug und dem Eigenfahrzeug innerhalb eines Sollabstandschwellenwertbereichs liegt, und einen fünften Steueralgorithmus, der zum Steuern des Eigenfahrzeugs unter der fünften Betriebsbedingung verwendet wird, um dem vorausfahrenden Fahrzeug beständig zu folgen.

3. Längssteuerverfahren für das automatisch fahrende Fahrzeug nach Anspruch 2, bei welchem in dem zweiten Steueralgorithmus die zweite Beschleunigung a2 berechnet wird nach einer Formel:

$$a2 = -\frac{(VehSpd\_kph - FroVehSpd\_kph)^2}{3.6 * 3.6 * 2 * (RelaDis\_m - ExpDis\_m)} * K_1$$

wobei VehSpd_kph die Geschwindigkeit des Eigenfahrzeugs angibt, FroVehSpd_kph die Geschwindigkeit des vorausfahrenden Fahrzeugs angibt, ExpDis_m den gewünschten Abstand angibt, RelaDis_m den tatsächlichen Abstand zwischen dem vorausfahrenden Fahrzeug und dem Eigenfahrzeug angibt, und $K_1$ eine Konstante zur Kompensation eines Verzögerungseffekts eines Steueralgorithmus angibt.

4. Längssteuerverfahren für das automatisch fahrende Fahrzeug nach Anspruch 2, bei welchem in dem dritten Steueralgorithmus die dritte Beschleunigung a3 berechnet wird nach einer Formel:

$$a3 = \begin{cases} k31, & C31 \\ k32, & C32 \\ k33, & C33 \\ k34, & C34 \end{cases}$$

wobei C31 bis C34 jeweils unterschiedliche Beschleunigungszustände bezeichnen, und k31 bis k34 jeweils Beschleunigungen angeben, die unterschiedlichen Beschleunigungszuständen entsprechen; und/oder
in dem vierten Steueralgorithmus die vierte Beschleunigung a4 berechnet wird nach einer Formel:

$$a4 = \begin{cases} k41, & C41 \\ k42, & C42 \\ k43, & C43 \\ k44, & C44 \end{cases}$$

wobei C41 bis C44 jeweils unterschiedliche Verlangsamungszustände bezeichnen, und k31 bis k34 jeweils Beschleunigungen angeben, die unterschiedlichen Verlangsamungszuständen entsprechen.

5. Längssteuerverfahren für das automatisch fahrende Fahrzeug nach Anspruch 2, bei welchem in dem fünften Steueralgorithmus die fünfte Beschleunigung a5 berechnet wird nach einer Formel:

$$a5 = (FroVehSpd\_kph - VehSpd\_kph) * k_p$$

wobei VehSpd_kph die Geschwindigkeit des Eigenfahrzeugs angibt, FroVehSpd_kph die Geschwindigkeit des vorausfahrenden Fahrzeugs angibt, und Kp einen Proportionalitätskoeffizient angibt.

6. Längssteuerverfahren für das automatisch fahrende Fahrzeug nach Anspruch 1, bei welchem das Berechnen der Beschleunigung des Eigenfahrzeugs aufweist: das Berechnen der Beschleunigung a des Eigenfahrzeugs nach einer Formel:

$$a = (TopSpd\_kph\text{-}VehSpd\_kph) * Kp$$

wobei TopSpd_kph eine Höchstgeschwindigkeit angibt, VehSpd_kph die gegenwärtige Geschwindigkeit angibt, Kp einen Proportionalitätsparameter P der Steuerung angibt, und

wobei der Proportionalitätsparameter Kp bestimmt wird gemäß der Formel:

$$Kp = \begin{cases} K_0, & VehSpd\_kph < TopSpd\_kph \\ K_1, & VehSpd\_kph \geq TopSpd\_kph \end{cases}$$

wobei $K_0$ einen ersten Parameter angibt, der einer optimalen Fahrerfahrung unter einer Beschleunigungsbetriebsbedingung eines Fahrzeugs entspricht und in einem realen Fahrzeugtest ermittelt wird, und $K_1$ einen zweiten Parameter angibt, der einer optimalen Fahrerfahrung unter einer Verlangsamungsbetriebsbedingung des Fahrzeugs entspricht und in dem realen Fahrzeugtest ermittelt wird.

7. Längssteuerverfahren für das automatisch fahrende Fahrzeug nach Anspruch 1, ferner mit dem Schritt:
im AEB-Modus des automatisch fahrenden Fahrzeugs, Steuern des automatisch fahrenden Fahrzeugs zum Bremsen mit einer Bremsverlangsamung im Bereich von 0,7g bis 0,9g, wobei g die Erdbeschleunigung angibt.

8. Maschinenlesbares Speichermedium, bei welchem das maschinenlesbare Speichermedium Befehle speichert, welche dazu dienen, eine Maschine derart zu steuern, dass sie das Längssteuerverfahren für das automatisch fahrende Fahrzeug nach einem der Ansprüche 1 bis 7 ausführt.

9. Prozessor, wobei der Prozessor dazu ausgebildet ist, ein Programm zur Ausführung des Längssteuerverfahrens für das automatisch fahrende Fahrzeug nach einem der Ansprüche 1 bis 7 auszuführen.

10. Längssteuersystem für ein automatisch fahrendes Fahrzeug mit:

einer Positionierungseinheit (610), die dazu ausgebildet ist, aktuelle Positionsinformationen des automatisch fahrenden Fahrzeugs zu erfassen;
einer Karteneinheit (620), welche mit der Positionierungseinheit über ein Signal verbunden ist, und dazu ausgebildet ist, Karteninformationen um das automatisch fahrende Fahrzeug herum basierend auf den aktuellen Positionsinformationen auszugeben;
einer Erkennungseinheit (630), die dazu ausgebildet ist, Informationen über ein Hindernis in der Umgebung des automatisch fahrenden Fahrzeugs zu erkennen; und
dem Prozessor nach Anspruch 9, wobei der Prozessor mit der Karteneinheit und der Erkennungseinheit über Signale verbunden ist und dazu ausgebildet ist, Informationen über ein Objekt vor dem automatisch fahrenden Fahrzeug basierend auf den Karteninformationen und den Informationen über das Hindernis zu erfassen, und eine Längssteuerung eines Fahrzeugs basierend auf den Informationen des Objekts vor dem automatisch fahrenden Fahrzeug durchzuführen.

**Revendications**

1. Procédé de commande longitudinale destiné à un véhicule à conduite automatique, comprenant :

la détection (S110) d'un mode longitudinal actuel du véhicule à conduite automatique, dans lequel le mode longitudinal comprend un mode de croisière, un mode de suivi et un mode de freinage d'urgence autonome, AEB ;
dans le mode de suivi (S120) du véhicule à conduite automatique, la détermination d'un algorithme de commande correspondant à une condition de fonctionnement actuelle en fonction d'une relation de correspondance préconfigurée entre des conditions de fonctionnement du véhicule à conduite automatique dans le mode de suivi et des algorithmes de commande, dans lequel l'algorithme de commande est utilisé pour commander un changement de vitesse du véhicule à conduite automatique dans une condition de fonctionnement correspondante ; et
la commande, en fonction de l'algorithme de commande déterminé, du véhicule à conduite automatique pour mettre en oeuvre un mouvement de suivi ; et
dans le mode de croisière (S130) du véhicule à conduite automatique, l'acquisition (S131) d'une vitesse actuelle du véhicule à conduite automatique dans le mode de croisière, et
le calcul d'une différence de vitesse relative entre la vitesse actuelle et une vitesse maximale de conduite d'un présent véhicule ;
la correction (S132) de la différence de vitesse relative pour amener une variation de la différence de vitesse relative dans une période témoin pour qu'elle soit au sein d'une plage prédéterminée ;
le calcul (S133) d'une accélération du présent véhicule en fonction de la différence de vitesse relative corrigée ; et

l'ajustement d'une vitesse du présent véhicule dans le mode de croisière en fonction de l'accélération du présent véhicule,

**caractérisé en ce que**

la relation de correspondance préconfigurée comprend une première condition de fonctionnement dans laquelle une vitesse d'un véhicule qui précède est inférieure à une vitesse du présent véhicule et une distance réelle entre le véhicule qui précède et le présent véhicule est inférieure à une distance souhaitée, et un premier algorithme de commande utilisé pour commander le présent véhicule dans la première condition de fonctionnement pour décélérer à une première accélération, dans lequel

dans le premier algorithme de commande, la première accélération a1 est calculée selon une formule :

$$a1 = \begin{cases} -\dfrac{\left(VehSpd_{kph} - FroVehSpd_{kph}\right)^2}{3.6 * 3.6 * 2 * (RelaDis_m - SfDis_m)} * \dfrac{VehSpd_{kph}}{FroVehSpd_{kph}} * \dfrac{ExpDis_m}{RelaDis_m} & SfDis\_m < RelaDis\_m < ExpDis\_m \\ -\dfrac{(VehSpd\_kph - FroVehSpd\_kph)^2}{3.6 * 3.6 * 2 * (RelaDis\_m - AEBDis\_m)} * \dfrac{VehSpd\_kph}{FroVehSpd\_kph} * \dfrac{ExpDis\_m}{RelaDis\_m} & AEBDis\_m < RelaDis\_m < SfDis\_m \\ -8 & RelaDis_m < AEBDis\_m \end{cases}$$

$$AEBDis\_m - (VehSpd\_kph - FroVehSpd\_kph) * TTC/3.6$$

$$TTC = \begin{cases} \dfrac{RelaDis_m * 3.6}{VehSpd\_kph - FroVehSpd\_kph}, & VehSpd_{kph} > FroVehSpd\_kph \\ 1000, & VehSpd_{kph} \leq FroVehSpd\_kph \end{cases}$$

$$SfDis_m = 0.8509 * FroVehSpd\_kph + c$$

dans lequel VehSpd_kph représente la vitesse du présent véhicule, FroVehSpd_kph représente la vitesse du véhicule qui précède, ExpDis_m représente la distance souhaitée, RelaDis_m représente la distance réelle entre le véhicule qui précède et le présent véhicule, SfDis_m représente une distance de sécurité, AEBDis_m représente une distance de freinage, TTC représente un moment de collision, et c représente une constante, et dans lequel la distance de sécurité indique une distance minimale demandée entre le véhicule qui précède et le présent véhicule dans un cas où le présent véhicule a la même vitesse que le véhicule qui précède ; et la distance de freinage indique un seuil de distance entre le véhicule qui précède et le présent véhicule lorsque le véhicule à conduite automatique commute du mode de suivi au mode AEB.

2. Procédé de commande longitudinale destiné au véhicule à conduite automatique selon la revendication 1, dans lequel la relation de correspondance entre des conditions de fonctionnement du véhicule à conduite automatique dans le mode de suivi et des algorithmes de commande comprend l'une quelconque ou plusieurs quelconques parmi :

une deuxième condition de fonctionnement dans laquelle la vitesse du véhicule qui précède est inférieure à la vitesse du présent véhicule et la distance réelle entre le véhicule qui précède et le présent véhicule est supérieure à la distance souhaitée, et un deuxième algorithme de commande utilisé pour commander le présent véhicule dans la deuxième condition de fonctionnement pour décélérer à une deuxième accélération ;

une troisième condition de fonctionnement dans laquelle la vitesse du véhicule qui précède est supérieure à la vitesse du présent véhicule et la distance réelle entre le véhicule qui précède et le présent véhicule est supérieure à la distance souhaitée, et un troisième algorithme de commande utilisé pour commander le présent véhicule dans la troisième condition de fonctionnement pour accélérer à une troisième accélération ;

une quatrième condition de fonctionnement dans laquelle la vitesse du véhicule qui précède est supérieure à la vitesse du présent véhicule et la distance réelle entre le véhicule qui précède et le présent véhicule est inférieure à une distance souhaitée, et un quatrième algorithme de commande utilisé pour commander le présent véhicule dans la quatrième condition de fonctionnement pour décélérer à une quatrième accélération ; et

une cinquième condition de fonctionnement dans laquelle une différence entre la vitesse du véhicule qui précède et la vitesse du présent véhicule est à l'intérieur d'une plage seuil de vitesse réglée et la distance réelle entre le véhicule qui précède et le présent véhicule est à l'intérieur d'une plage seuil de distance réglée, et un cinquième algorithme de commande utilisé pour commander le présent véhicule dans la cinquième condition de fonctionnement pour suivre de façon stable le véhicule qui précède.

3. Procédé de commande longitudinale destiné au véhicule à conduite automatique selon la revendication 2, dans lequel dans le deuxième algorithme de commande, la deuxième accélération a2 est calculée selon une formule :

$$a2 = -\frac{(VehSpd\_kph - FroVehSpd\_kph)^2}{3.6 * 3.6 * 2 * (RelaDis\_m - ExpDis\_m)} * K_1$$

dans lequel VehSpd_kph représente la vitesse du présent véhicule, FroVehSpd_kph représente la vitesse du véhicule qui précède, ExpDis_m représente la distance souhaitée, RelaDis_m représente la distance réelle entre le véhicule qui précède et le présent véhicule, et $K_1$ représente une constante utilisée pour compenser un effet de retard d'un algorithme de commande.

4. Procédé de commande longitudinale destiné au véhicule à conduite automatique selon la revendication 2, dans lequel dans le troisième algorithme de commande, la troisième accélération a3 est calculée selon une formule :

$$a3 = \begin{cases} k31, & C31 \\ k32, & C32 \\ k33, & C33 \\ k34, & C34 \end{cases}$$

dans lequel C31 à C34 représentent respectivement différents états d'accélération, et k31 à k34 représentent respectivement des accélérations correspondant aux différents états d'accélération ; et/ou
dans le quatrième algorithme de commande, la quatrième accélération a4 est calculée selon une formule :

$$a4 = \begin{cases} k41, & C41 \\ k42, & C42 \\ k43, & C43 \\ k44, & C44 \end{cases}$$

dans lequel C41 à C44 représentent respectivement différents états de décélération, et k41 à k44 représentent respectivement des accélérations correspondant aux différents états de décélération.

5. Procédé de commande longitudinale destiné au véhicule à conduite automatique selon la revendication 2, dans lequel dans le cinquième algorithme de commande, la cinquième accélération a5 est calculée selon une formule :

$$a5 = (FroVehSpd\_kph - VehSpd\_kph) * k_p$$

dans lequel VehSpd_kph représente la vitesse du présent véhicule, FroVehSpd_kph représente la vitesse du véhicule qui précède, et Kp représente un coefficient de proportionnalité.

6. Procédé de commande longitudinale destiné au véhicule à conduite automatique selon la revendication 1, dans lequel le calcul d'accélération du présent véhicule comprend : le calcul de l'accélération a du présent véhicule selon une formule :

$$a = (TopSpd\_kph - VehSpd\_kph) * Kp$$

dans lequel TopSpd_kph représente une vitesse maximale, VehSpd_kph représente la vitesse actuelle, Kp représente un paramètre de proportionnalité d'une commande P, et
dans lequel le paramètre de proportionnalité Kp est déterminé selon une formule :

$$Kp = \begin{cases} K_0, & VehSpd\_kph < TopSpd\_kph \\ K_1, & VehSpd\_kph \geq TopSpd\_kph \end{cases}$$

dans lequel $K_0$ représente un premier paramètre qui correspond à une expérience de conduite optimale dans une condition de fonctionnement d'accélération d'un véhicule et est déterminé dans un test de véhicule réel, et $K_1$ représente un second paramètre qui correspond à une expérience de conduite optimale dans une condition de fonctionnement de décélération du véhicule et est déterminé dans le test de véhicule réel.

7. Procédé de commande longitudinale destiné au véhicule à conduite automatique selon la revendication 1, comprenant en outre :
dans le mode AEB du véhicule à conduite automatique, la commande du véhicule à conduite automatique pour freiner à une décélération de freinage allant de 0,7 g à 0,9 g, dans lequel g représente une accélération gravitationnelle.

8. Support de stockage lisible par machine, dans lequel le support de stockage lisible par machine stocke des instructions utilisées pour commander une machine pour mettre en oeuvre le procédé de commande longitudinale destiné au véhicule à conduite automatique selon l'une quelconque des revendications 1 à 7.

9. Processeur, dans lequel le processeur est configuré pour exécuter un programme pour mettre en oeuvre le procédé de commande longitudinale destiné au véhicule à conduite automatique selon l'une quelconque des revendications 1 à 7.

10. Système de commande longitudinale destiné à un véhicule à conduite automatique, comprenant :

une unité de positionnement (610) configurée pour acquérir des informations de position actuelle du véhicule à conduite automatique ;
une unité cartographique (620) connectée à l'unité de positionnement par le biais d'un signal, et configurée pour délivrer en sortie des informations cartographiques autour du véhicule à conduite automatique en fonction des informations de position actuelle ;
une unité de détection (630) configurée pour détecter des informations d'un obstacle autour du véhicule à conduite automatique ; et
le processeur selon la revendication 9, dans lequel le processeur (640) est connecté à l'unité cartographique et à l'unité de détection par le biais de signaux, et est configuré pour acquérir des informations d'un objet qui précède le véhicule à conduite automatique en fonction des informations cartographiques et des informations de l'obstacle, et mettre en oeuvre une commande longitudinale sur un véhicule en fonction des informations de l'objet qui précède le véhicule à conduite automatique.

S110

A current longitudinal mode of the automatic driving vehicle is detected

S120

A following control is performed when the automatic driving vehicle is in the following mode

S130

A cruise control is performed when the automatic driving vehicle is in the cruise mode

**Figure 1**

S121

A current working condition of the automatic driving vehicle in the following mode is detected

S122

A control algorithm corresponding to the current working condition is determined, based on a pre-configured correspondence relationship between working condition of the automatic driving vehicle in the following mode and control algorithms, where the control algorithm is used for controlling a speed change of the automatic driving vehicle in a corresponding working condition

S123

The automatic driving vehicle is controlled to perform a following movement, based on the determined control algorithm

**Figure 2**

Second working
condition

First working
condition

Fifth working
condition

Third working
condition

Fourth working
condition

**Figure 3**

S131

A current speed of the ego vehicle in the cruise mode is
acquired, and a relative speed difference between the current
speed and a maximum drivable speed of the ego vehicle is
calculated

S132

The relative speed difference is corrected to cause a
variation of the relative speed difference in a control period
to be within a predetermined range

S133

An acceleration of the ego vehicle is calculated based on the
corrected relative speed difference

S134

The speed of the ego vehicle in the cruise mode is adjusted
based on the acceleration of the ego vehicle

**Figure 4**

**Figure 5**

**Figure 6**

**Figure 7**

**EP 3 939 844 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104925057 A